# EUROPÄISCHE PATENTSCHRIFT

(11) **EP 0 824 388 B1**
(45) Veröffentlichungstag und Bekanntmachung des Hinweises auf die Patenterteilung: **29.12.1999**
(21) Anmeldenummer: 96907396.4
(22) Anmeldetag: 08.03.1996
(51) Int. Cl.: B23D 59/00, B23Q 11/00

(54) **VERTIKALE PLATTENSÄGE**
VERTICAL PANEL SAW
MACHINE A SCIER VERTICALE POUR LE DECOUPAGE DE PANNEAUX

(30) Priorität: 12.05.1995 DE 19517488; 31.05.1995 DE 19519870
(43) Veröffentlichungstag der Anmeldung: 25.02.1998
(73) Patentinhaber: Reich Spezialmaschinen GmbH, 72622 Nürtingen (DE)
(72) Erfinder: BINDER, Werner, D-70567 Stuttgart (DE); SCHIETINGER, Martin, D-72644 Oberboihingen (DE)
(74) Vertreter: Hoeger, Stellrecht & Partner
(86) Internationale Anmeldenummer: EP9600999
(87) Internationale Veröffentlichungsnummer: WO9635540

(56) Entgegenhaltungen:
- EP-A- 0 244 358
- EP-A- 0 503 465
- EP-A- 0 596 832
- GB-A- 2 139 556

## Beschreibung

Die Erfindung betrifft eine vertikale Plattensäge mit einem horizontal und vertikal verfahrbaren Sägeaggregat, mit einear ein Werkstück aufnehmenden, im wesentlichen vertikal angeordneten und in der Vertikalen verschieblichen Stützrost, welcher eine Mehrzahl von horizontal angeordneten und parallel zueinander beabstandeten Stützbalken sowie senkrecht hierzu angeordnete, sich zum Werkstück hin öffnende Absaugkanäle umfaßt, und mit einer Vorrichtung zum Aufnehmen des beim Horizontalschnitt stützrostseitig anfallenden Sägestaubs; siehe GB-A 2 139 556.

Solche vertikalen Plattensägen werden vielfältig zum Zusägen von Plattenmaterialien auf vorgegebene Maße verwendet, wobei die Vertikalschnitte an fest vorgegebenen Positionen der Plattensäge vorgenommen werden, die denen der vertikal verlaufenden Absaugkanäle entsprechen und bei denen der Sägeblattrand in die nach vorne, d.h. zum Sägeaggregat hinweisenden Öffnung der Absaugkanäle eintritt.

Das sichere Entfernen, Zurückhalten, gegebenenfalls auch Absaugen des Sägestaubes ist notwendig, um eine gesundheitliche Beeinträchtigung des Bedienungspersonals der Plattensäge zu vermeiden.

Während beim Vertikalschnitt die Absaugkanäle an vorgegebenen Positionen eine Absaugung und Entsorgung des hinter dem Werkstück, d.h. also stützrostseitig, anfallenden Sägestaubes erlauben, wurde bislang für den Horizontalachnitt das Problem dadurch bewältigt, daß die Rückseite der Plattensäge insgesamt mit einer Wand abgedeckt wird. Bie der Plattensäge gemäße GB-A 2 139 556 wird das Sägeaggregat mit einem horizontalen Absaugkanal fest gekoppelt, welcher sägeblattseitig über ein umlaufendes Band verschlossen ist. Das umlaufende Band weist einen Schlitz auf, in den der Sägeblattrand eintauchen kann. Der Schlitz wird dem Sägeaggregat beim Horizontalschnitt nachgeführt, so daß er den Absaugkanal für den Eintritt des Sägeblattrandes nur an der Stelle freigibt, an der das Sägeaggregat gerade schneidet (GB-A-2139556).

Bei einer anderen Ausführungsform wird vorgesehen, daß zwischen den Stützbalken und der Rückwand Kanäle ausgebildet werden, die bei Auflage eines zu sägenden Werkstückes an der Vorderseite, d.h. vom Sägeaggregat her gesehen, verschlossen werden und die über ein Gebläse beim Setzen des Horizontalschnittes abgesaugt werden. Aufgrund des großen Kanalquerschnittes sind leistungsstarke Gebläse notwendig, um einen ausreichenden Entsorgungseffekt für den Sägestaub sicherzustellen.

Daneben wurde vorgeschlagen, den Stützrost durch eine in der Horizontalen mehrfach geschlitzte Platte zu ersetzen und die abschließende Rückwand der Plattensäge beizubehalten. Die Schlitze in der Stützplatte sind auf Schlitze verengt, die ein im wesentlichen berührungsfreies Durchtreten des Sägeblattrandes beim Horizontalschnitt erlauben. Der Abstand der Rückwand der Plattensäge zu der Stützwand wird groß gewählt, damit nicht Staubpartikel, die auf die Rückwand treffen, wieder nach vorne und gegebenenfalls durch die Schlitzöffnung hindurchgeschleudert werden und so wieder in die Umgebungsluft der Plattensäge gelangen können.

Der Sägestaub fällt bei dieser konstruktiven Lösung nach unten bis zu dein Bodenbereich der Plattensäge, wo ein Absaugrohr vorgesehen ist, welches den größten Anteil des herabfallenden Sägestaubes aufnimmt und abtransportiert. Die Anteile des Sägestaubes, die nicht durch das Absaugrohr entfernt werden, können durch einen abklappbaren Boden aus der Plattensäge entfernt werden.

Nachteilig bei dieser Plattensäge ist der immer noch sehr große offene Querschnitt sowie der große zu reinigende rückwärtige Raum zwischen der Rückwand und der Stützwand der Plattensäge.

Aufgabe der vorliegenden Erfindung ist es, eine vertikale Plattensäge vorzustellen, die mit einem reduzierten apparativen Aufwand und einer geringeren Saugleistung der Sägestaubgebläse auskommt.

Diese Aufgabe wird bei einer Plattensäge der eingangs beschriebenen Art erfindungsgemäß dadurch gelöst, daß die Stützbalken als im wesentlichen geschlossene Kanäle mit jeweils einer sich im wesentlichen über die gesamte Länge des Stützbalkens erstreckenden schlitzförmigen Öffnung ausgebildet sind, in welche ein Sägeblattrand des Sägeaggregats beim Horizontalschnitt im wesentlichen berührungsfrei eintreten kann, und daß die Stützbalkenkanäle mit einer Sägestaubaufnahme verbunden sind, wobei die Stützbalkenkanäle gleichzeitig einen Teil der Vorrichtung zur Aufnahme des beim Horizontalschnitt stützrostseitig anfallenden Sägestaubs bilden und mit einem Ende in einen Absaugkanal münden, welchletzterer hierbei ebenfalls einen Teil der Sägestaubaufnahme bildet, und wobei die Absaugkanäle an den Eintrittsstellen der Stützbalkenkanäle ein nach unten gerichtetes Leitelement aufweisen.

Überraschenderweise zeigt sich, daß bei der Ausbildung der Stützbalken als Kanäle, in die der stützrostseitig anfallende Sägestaub durch das Sägeblatt eingetragen wird, schon sehr gute Ergebnisse im Abführen des stützrostseitig anfallenden Sägestaubanteiles erreicht werden. Im Gegensatz zu dem vorher besprochenen Stand der Technik ist der rückwärtige Wandbereich der Stützbalkenkanäle nicht weit von den Eintrittsschlitzen für den Sägeblattrand entfernt, sondern in der Regel lediglich einige Zentimeter, und trotzdem wird das Problem des Zurückschleudern des Sägestaubes durch den Schlitz in die freie, die Plattensäge umgebende Atmosphäre weitgehend vermieden. Ursächlich hierfür mag sein, daß in dem relativ kleinen Querschnitt der Stützbalkenkanäle durch den Sägeblattrand eine Luftströmung erzeugt wird, die die Sägestaubanteile mit einer relativ großen Impulskomponente in Längsrichtung des Stützbalkens versehen, so daß letztendlich ein Transport des Sägestaubes in Längsrichtung der Stützbalkenkanäle überwiegt und die quer dazu gerichteten Impulskomponenten des Sägestaubes weniger zum Tragen kommen. Durch die in dem Kanal zusätzlich auftretenden Verwirbelungen werden den Staubpartikeln zusätzliche Impulskomponenten aufgeprägt, die ein direktes Zurückschleudern von der Rückwand durch den Eintrittsschlitz des Sägeblattrandes unwahrscheinlicher machen.

Die Stützbalkenkanäle münden mit einem Ende in einen der vertikal angeordneten Absaugkanäle, welchletztere hierbei die Sägestaubaufnahme für die Stützbalkenkanäle bilden. Dadurch entfällt eine zusätzliche Sägestaubaufnahme für den Horizontalschnitt, da die für den Vertikalschnitt ohnehin schon vorhandene und mit den Absaugkanälen verbundene mitgenutzt werden kann.

An den Eintrittsstellen der Stützbalkenkanäle in die Absaugkanäle ist ein nach unten gerichtetes Leitelement vorgesehen. Dies stellt sicher, daß der aus den Stützbalkenkanälen in den Absaugkanal eintretende Sägestaub sich nicht vertikal nach oben im Absaugkanal verteilen kann, sondern zugleich nach unten in Richtung zum Auslaß des Absaugkanales geleitet wird.

Durch den drastisch verringerten freien Querschnitt der Stützbalkenkanäle, verglichen mit den anderen bekannten Lösungen im Stand der Technik, reicht die normale für die vertikalen Absaugkanäle ausgelegte Saugleistung aus, da, wie oben erwähnt, durch den Sägeblattrand Luft in den Kanal eingetragen und eine Luftströmung in diesem Kanal erzeugt wird. Die auf die Absaugkanäle gerichtete Saugleistung dient dann im wesentlichen nur noch dem Absaugen des in die Absaugkanäle aus den Stützbalkenkanälen eintretenden Sägestaubes.

Um zu einer weitergehenden Reduzierung des in der Umgebungsatmosphäre der Plattensäge vorhandenen Sägestaubes zu kommen, kann vorgesehen sein, daß in den Stützbalkenkanälen Prallflächen angeordnet werden, welche sich im Inneren der Kanäle von dem die schlitzförmige Öffnung beinhaltenden Wandbereich weg erstrecken und mit der Längsrichtung der Kanäle einen spitzen Winkel bilden. Die freien Enden der Prallflächen weisen dabei in Richtung der Luftströmung im Stützbalkenkanal, die durch den Sägeblattrand erzeugt wird.

Vorzugsweise werden die Prallflächen sich über mindestens die Hälfte der Höhe der Stützbalkenkanäle erstrecken (in Richtung des eindringenden Sägeblatts gesehen), häufig aber auch nicht wesentlich darüber hinaus, damit in der dem Längsschlitz des Stützbalkenkanals entfernten Bereichs des Kanals ein ausreichend freier Querschnitt für den Transport des Sägestaubes freibleibt.

Der Winkel, den die Prallflächen mit der Längsrichtung der Kanäle bilden, beträgt ca. 20° bis ca. 45°. Allgemein wird man sich daran orientieren, daß die Prallflächen ungefähr parallel zur Tangente des Kreisumfanges des Sägeblatts an dessen Eintrittsstelle in den Kanal angeordnet sind.

Dadurch werden die ungefähr tangential von den Sägezähnen des Sägeblattrandes abgeschleuderten Sägestaubpartikel ohne Behinderung zunächst vom Sägeblatt abgeschleudert und gelangen so im wesentlichen im freien Flug in den rückwärtigen Bereich des Stützbalkenkanales mit seinem freien Querschnitt.

Eine weitere Verbesserung der Staubfreiheit in der Umgebungsluft der Plattensäge wird damit erreicht, daß die Prallflächen so ausgebildet und so angeordnet sind, daß zwei benachbarte Flächen sich in der Längsrichtung überlappen. Dies bedeutet, daß der Ansatz der einen Prallfläche an dem dein Schlitz benachbarten Wandbereich des Kanals von dem freien Ende der benachbarten Prallfläche etwas überlappt wird, so daß bei Draufsicht auf den Schlitz des Stützbalkenkanals die rückwärtige Wand des Stützbalkenkanals durch die Prallflächen im wesentlichen verdeckt bleibt.

Die Prallflächen können zum einen im wesentlichen ebene Flächen darstellen oder aber, um eine höhere Effizienz bei der Erzeugung eines Luftstromes in den Stützbalkenkanälen zu erzielen, als teilzylindrische Fläche ausgebildet sein, deren Radius im wesentlichen dem des Sägeblattradius entspricht oder größer ist.

Darüber hinaus lassen sich auch die Absaugkanäle im wesentlichen über ihre gesamte Länge mit Prallflächen ausrüsten, wie dies für die Stützkanäle bevorzugt ist.

Dies läßt sich noch dadurch unterstützen, daß auf seiten des Stützbalkenkanals an seinem mit dem Absaugkanal verbundenen Ende ein weiteres Leitelement angeordnet wird, welches mit dem Leitelement des Absaugkanals zusammenwirkt und dem Sägestaub beim Austritt aus dem Stützbalkenkanal bereits eine vertikal nach unten gerichtete Komponente aufprägt.

Die vorgestellte erfindungsgemäße Lösung für eine stützrostseitige Absaugung des Sägestaubes beim Horizontalschnitt ist eine sehr einfache und preiswerte Lösung, da die Stützbalken beispielsweise in Kunststoff gespritzt werden können, die dann beispielsweise beim ersten Sägevorgang die notwendigen Eintauchschlitze für den Sägeblattrand erhalten. Selbstverständlich können die Längsschlitze in den Schlitzbalkenkanälen auch vorgefertigt werden.

Darüber hinaus lassen sich die erfindungsgemäßen Stützbalkenkanäle auch für die Vertikalabsaugung verwenden, so daß die Teilevielfalt bei der Plattensäge vermindert ist. Bei der erfindungsgemäßen Plattensäge ist die Unfallgefahr wesentlich verringert, da das auf der Rückseite des Werkstückes überstehende Sägeblatt immer von dem Stützbalkenkanal beim Horizontalschnitt bzw. vom Absaugkanal beim Vertikalschnitt abgedeckt ist.

Durch die Anlageflächen beiderseits des Sägeblatts können selbst Kleinstteile von Hand gehalten und gefahrlos gesägt werden.

Die Handhabung des Werkstückes wird gegenüber dem Stand der Technik vor allem dadurch verbessert, daß zwischen den einzelnen Stützbalken immer noch ein Zwischenraum existiert, in den man gefahrlos eingreifen kann, so daß das Werkstück auch zwischen den Stützbalkenkanälen gegriffen und gehalten werden kann.

Ein Vorteil der vorliegenden Erfindung liegt schließlich auch darin, daß die die gesamte Plattensäge abdeckende Rückwand vollständig entfallen kann, wodurch ein Maschinenaufbau verkürzt wird.

Darüber hinaus wird die Maschine wieder transparent und kann damit problemlos vor eine Fensterfront gestellt werden, ohne daß dadurch die Raumhelligkeit und der Lichteinfall durch die Fenster in den Arbeitsraum in größerem Umfang beeinträchtigt würde.

Diese und weitere Vorteile der Erfindung werden im folgenden anhand der Zeichnung noch näher erläutert. Es zeigen im einzelnen:
- Figur 1: eine perspektivische Darstellung einer erfindungsgemäßen Plattensäge;
- Figur 2: eine Schnittdarstellung im Bereich eines Stützrostes der erfindungsgemäßen Plattensäge von Figur 1;
- Figur 3: ein vergrößerter Ausschnitt eines Stützrostes der erfindungsgemäßen Plattensäge;
- Figur 4: Detail X aus Figur 3 in vergrößerter Darstellung;
- Figur 5: Schnittansicht längs Linie 5-5 in Figur 4; und
- Figur 6: eine Schnittansicht längs Linie 6-6 in Figur 3.

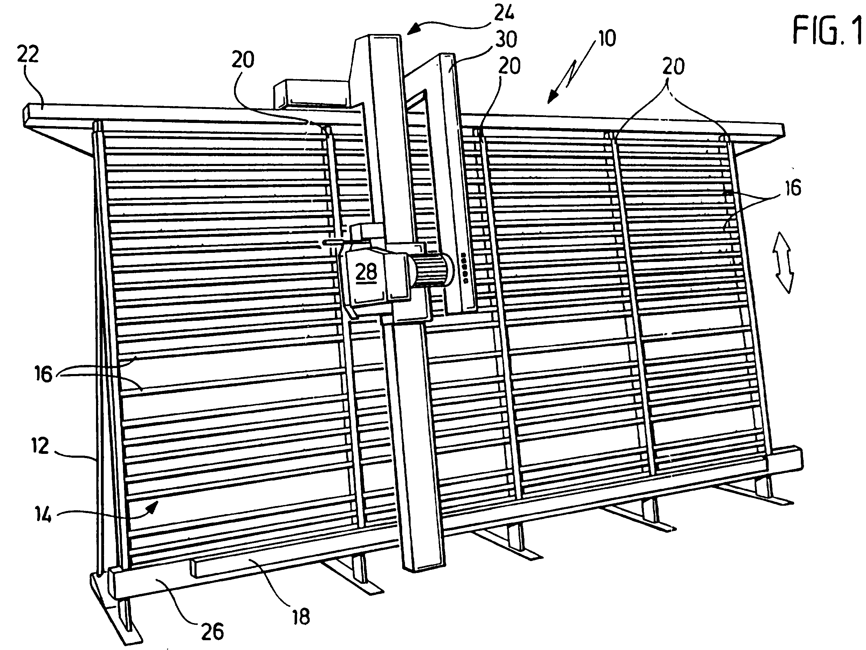

Die in Figur 1 dargestellte erfindungsgemäße Plattensäge ist insgesamt mit dem Bezugszeichen 10 bezeichnet. Die vertikale Plattensäge 10 umfaßt neben einem Maschinengestell 12 einen von diesem vertikal verschieblich getragenen frontseitigen Stützrost 14, welcher eine Vielzahl horizontal verlaufender, paralleler Stützbalken 16 umfaßt, welche eine leicht gegen die Vertikale geneigte Auflagefläche für zu sägende plattenförmige Werkstücke bildet. Am unteren Ende des Stützrostes 14 ist eine Auflagerschiene 18 angeordnet, welche das plattenförmige Werkstück stützt. Diese Auflagerschiene 18 ist an den für den Vertikalschnitt vorgesehenen Stellen des Stützrostes mit einer Öffnung versehen oder unterbrochen, so daß das Sägeblatt der Plattensäge beim Vertikalschnitt nach unten, die Auflagerschiene 18 kreuzend weitergeführt werden kann, um den Vertikalschnitt zu vollenden (diese Details sind in der Zeichnung nicht wiedergegeben).

In Längsrichtung des Stützrostes 14 sind in regelmäßigen Abständen quer zu den Stützbalken 16 angeordnete Absaugkanäle 20 angeordnet, welche in einer Ebene mit den Stützbalken 16 liegen und gegebenenfalls der Halterung der Stützbalken 16, d.h. als Konstruktionselement des Stützrostes 14, dienen.

Am oberen Ende des Maschinengestells 12 ist eine Fahrschiene 22 angeordnet, auf welcher eine Sägeaggregathalterung 24 verschieblich angeordnet ist. Die Sägeaggregathalterung 24 stützt sich an ihrem unteren Ende an einem unteren Gestellbalken 26 ab, der die untere Begrenzung des Stützrostes 14 und dessen Vertikalbewegung bildet und gleichzeitig die Auflagerschiene 18 trägt.

Die Halterung 24 dient der vertikal verschieblichen Lagerung eines Sägeaggregats 28, welches um 90° verschwenkbar an der Halterung 24 gelagert ist, so daß mit demselben Sägeaggregat sowohl in vertikaler Richtung als auch in horizontaler Richtung (letzteres unter Verschiebung der Halterung 24 entlang der Fahrschiene 22) geschnitten werden kann.

Für den Vertikalschnitt sind feste Positionen entlang des Stützrostes bzw. des Maschinengestells vorgesehen, und zwar an den Stellen, an denen die vertikalen Absaugkanäle 20 vorgesehen sind, welche sich mit einer durchgehenden schlitzförmigen Öffnung nach vorne, d.h. in Richtung zum Werkstück bzw. zum Sägeaggregat hin, öffnen. In diesen Längsschlitz taucht dann das Sägeblatt des Sägeaggregats beim Vertikalschnitt ein.

Beim Horizontalschnitt wird der vertikal verschiebliche Stützrost 14 so auf das Sägeblatt des Sägeaggregats 28 ausgerichtet, daß ein in einem der Stützbalken 16 vorgesehener Längsschlitz auf die Position des Sägeblattes ausgerichtet ist, so daß dieses beim Horizontalschnitt in diesen eintauchen kann. An der Halterung 24 ist ferner noch eine Absaugvorrichtung 30 angeordnet, welche sich mit einem L-förmig ausgebildeten Arm vom oberen Ende des Maschinengestells 12 parallel zu der Vertikalführung der Halterung 24 erstreckt und mit ihrem unteren, freien Ende über einen (nicht dargestellten) Schlauch mit dem Gehäuse des Sägeaggregats 28 verbunden ist. Diese Absaugung 30 entfernt auf der Oberseite des Werkstücks, d.h. sägeaggregatseitig, anfallenden Sägestaub.

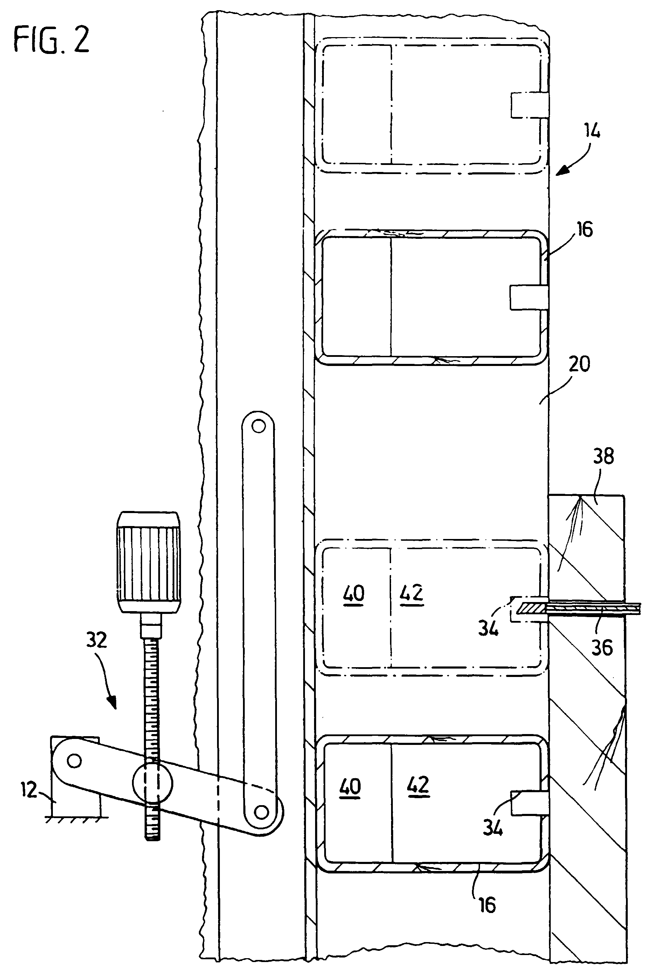

Figur 2 zeigt einen Ausschnitt einer Schnittdarstellung senkrecht zu den Stützbalken 16 verlaufend. Über ein Antriebsaggregat 32, welches sich maschinengestellseitig abstützt, läßt sich der aus den Stützbalken 16 gebildete Stützrost 14 in vertikaler Richtung verschieben (beispielsweise zwischen den durchgezogenen und den strichpunktiert gezeichneten Stellungen der Stützbalken 16). Stellt die durchgezogene Darstellung der Stützbalken 16 die Normalposition dar, werden diese in die strichpunktiert dargestellte Position angehoben, soll ein Schnitt auf der in der Figur 2 gezeigten Höhe durchgeführt werden. Dadurch kommt der Längsschlitz 34 exakt in die Position, in der das Sägeblatt 36 schneidet, so daß das durch das Werkstück 38 mit seinem Rand hindurchtretende Sägeblatt 36 ohne Beschädigung des Stützrostes den Horizontalschnitt vornehmen kann.

Bei dieser Darstellung ist auch der innere Aufbau der Stützbalken 16 zu erkennen, der sich neben dem Längsschlitz 34 aus einem freien Querschnitt 40 und einem Prallflächen in Form von Lamellen beinhaltenden Querschnitt 42 zusammensetzt.

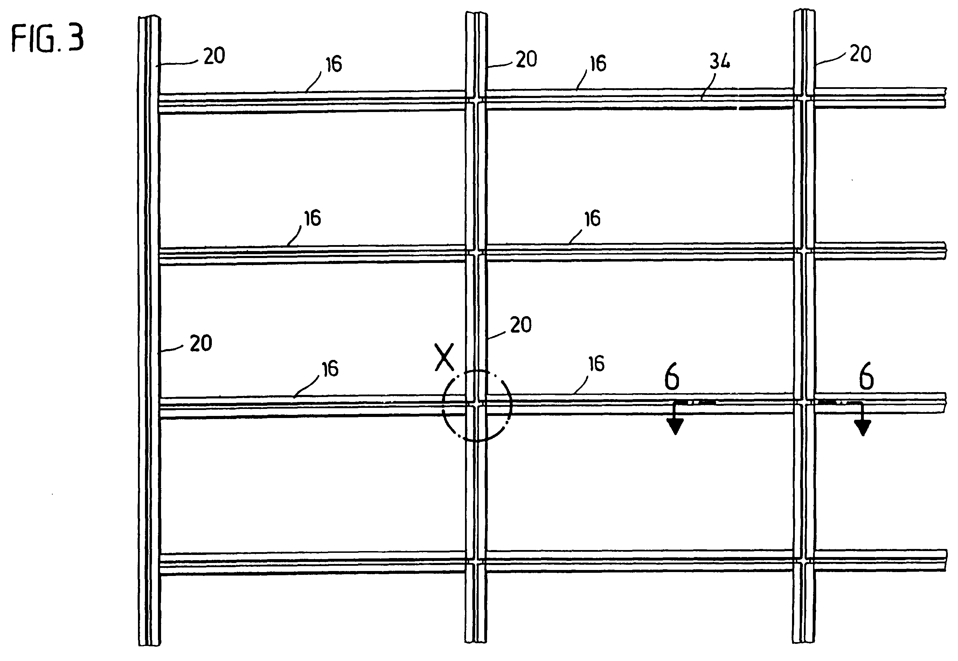

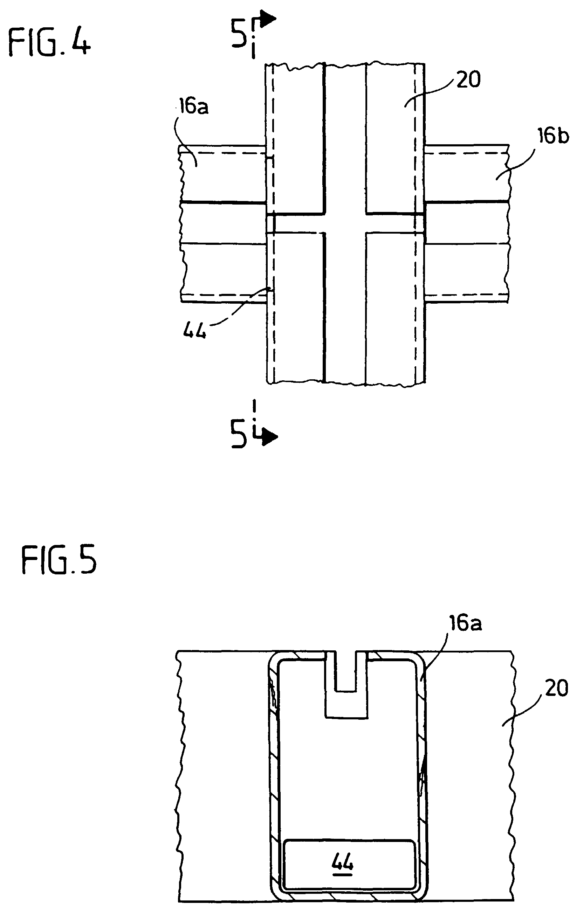

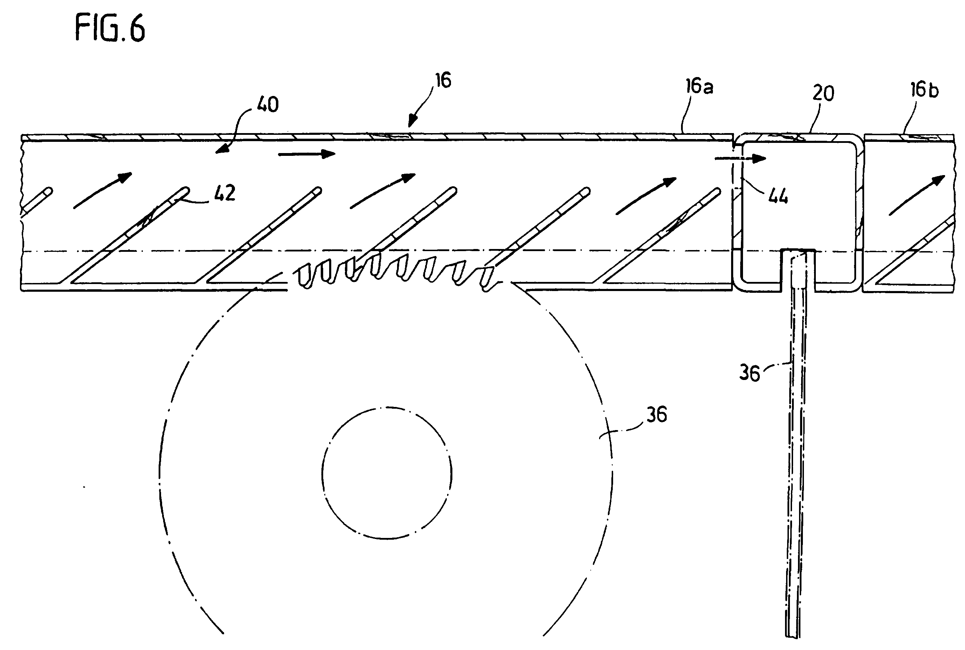

Wie aus Figur 3 ersichtlich, verlaufen die Stützbalken 16 zwischen zwei vertikalen Absaugkanälen 20, wobei jeder Abschnitt der Stützbalken 16 auf einer Seite in einen Absaugkanal 20 mündet, während er mit seinem anderen Ende ohne Verbindung zum anderen Absaugkanal anschließt. Dadurch ergibt sich eine eindeutige Transportrichtung für den abzutransportierenden Sägestaub innerhalb des Stützbalkens 16, die sich zum einen durch die durch das Sägeblatt bzw. den Sägeblattrand in den Stützbalken 16 eingeförderten Luftmenge und den dadurch erzeugten Luftstrom ergibt und zum zweiten durch die Absaugwirkung der Absaugkanäle 20. Die Verbindung von Absaugkanal 20 und Stützbalken 16 ist als vergrößertes Detail nochmals in Figur 4 dargestellt. Während der Abschnitt 16a eines Stützbalkens 16 mit freiem Querschnitt 44 (vgl. Figur 5) in den Absaugkanal 20 mündet, liegt der Abschnitt 16b eines Stützbalkens 16 an einer geschlossenen Wandung des Absaugkanals 20 an. Dadurch, daß lediglich die Längsachlitze 34 der Stützbalken 16 sowie die Längsschlitze in den Absaugkanälen 20 als Öffnungen für den Luftzutritt dienen, wobei regelmäßig beim Arbeiten mit der Plattensäge noch ein Großteil der Längsschlitze 34 der Stützbalken 16 abgedeckt ist, ist lediglich eine geringe Saugleistung der Absaugung notwendig, um zu einer ausreichenden Transportleistung für den anfallenden Sägestaub zu sorgen. Darüber hinaus wird, wie bereits oben erwähnt, der Abtransport von Sägespänen und Sägestaub durch die von dem Sägeblattrand in die Kanäle der Stützbalken 16 eingeförderte Luftraum unterstützt. Das Innere der Stützbalken 16 sei anhand von Figur 6 noch näher erläutert.

Die Stützbalken 16 sind im wesentlichen als Hohlkörper ausgebildet, die sich nach vorne, d.h. in Richtung zum aufliegenden Werkstück hin bzw. ebenfalls zum Sägeaggregat 28 hin, über einen Längsschlitz 34 öffnen. Im Inneren der Stützbalken 16 sind vorzugsweise in regelmäßiger Anordnung Lamellen 42 angeordnet, welche mit der Längsrichtung der Stützbalken 16 einen spitzen Winkel bilden, beispielsweise wie im gezeigten Beispiel ca. 40°. Die Lamellen verlaufen damit ungefähr in tangentialer Richtung zu dem eintretenden Sägeblatt. Die Prallflächen oder Lamellen 42 haben zweierlei Funktion, zum einen leiten sie den von dein Sägeblattrand erzeugten Luftstrom zu dem freien Querschnitt 40 und sorgen durch eine Verengung des Strömungsquerschnittes im Stützbalken 16 für eine Beschleunigung der Strömungsgeschwindigkait, zum anderen verhindern sie, daß Sägestaubpartikel von der rückwärtigen Wand des Stützbalkens 16 direkt zum Längsschlitz 34 umgelenkt werden können, und bieten für Partikel mit solchem Flugverhalten zunächst eine Prallfläche, die die Partikel wieder zurück in den rückwärtigen Raum des Stützbalkens 16 gelangen lassen. Dadurch wird erreicht, daß die Sägestaubpartikel im wesentlichen ohne Unterstützung einer Absaugströmung, die in gewissem Maße auch durch den Absaugkanal 20 erzielt wird, in Richtung zum Absaugkanal 20 gefördert werden, wo sie dann in vertikaler Richtung nach unten beschleunigt werden und beispielsweise in dem unteren Gestellbalken 26, der als Sammelkanal fungieren kann, abgesaugt werden. Die Stützbalken 16 des Stützrostes 14 sowie auch gegebenenfalls die Absaugkanäle 20 können zunächst mit einem geschlossenen Profil ohne die jeweiligen Längsschlitze hergestellt werden, wobei dann bei dem ersten Schnitt in Horizontal- bzw. in Vertikalrichtung an der einem jeweiligen Stützbalken 16 bzw. Absaugkanal 20 zugeordneten Stelle von dem Sägeblatt zunächst der entsprechende Längsschlitz freigeschnitten wird.

Während der Vertikalschnitt auf die festen Positionen der Absaugkanäle 20 festgelegt ist, kann der Horizontalschnitt in beliebiger Höhe erfolgen, da der vertikal verschiebliche Stützrahmen 14 jeweils genau auf die Schnittposition des Sägeblattes 36 eingestellt werden kann, so daß bei jedem Horizontalschnitt, egal in welcher Höhe, der Rand des Sägeblattes 36 in einen Längsschlitz 34 eines Stützbalkens 16 eintritt.

## Patentansprüche

1. Vertikale Plattensäge (10) mit einem horizontal und vertikal verfahrbaren Sägeaggregat (28), mit einem ein Werkstück aufnehmenden, im wesentlichen vertikal angeordneten und in der Vertikalen verschieblichen Stützrost (14), welcher eine Mehrzahl von horizontal angeordneten und parallel zueinander beabstandeten Stützbalken (16) sowie senkrecht hierzu angeordnete, sich zum Werkstück hin öffnende Absaugkanäle (20) umfaßt, und mit einer Vorrichtung zum Aufnehmen des beim Horizontalschnitt stützrostseitig anfallenden Sägestaubs, dadurch gekennzeichnet, daß die Stützbalken (16) als im wesentlichen geschlossene Kanäle mit jeweils einer sich im wesentlichen über die gesamte Länge des Stützbalkens erstreckenden schlitzförmigen Öffnung (34) ausgebildet sind, in welche ein Sägeblattrand des Sägeaggregats (28) beim Horizontalschnitt im wesentlichen berührungsfrei eintreten kann, und daß die Stützbalkenkanäle (16) mit einer Sägestaubaufnahme verbunden sind, wobei die Stützbalkenkanäle (16) gleichzeitig einen Teil der Vorrichtung zur Aufnahme des beim Horizontalschnitt stützrostseitig anfallenden Sägestaubs bilden und mit einem Ende in einen Absaugkanal (20) münden, welchletzterer hierbei ebenfalls einen Teil der Sägestaubaufnahme bildet, und wobei die Absaugkanäle (20) an den Eintrittsstellen der Stützbalkenkanäle (16) ein nach unten gerichtetes Leitelement aufweisen.

2. Plattensäge nach Anspruch 1, dadurch gekennzeichnet, daß die Stützbalkenkanäle Prallflächen (42) beinhalten, welche sich im Inneren der Kanäle von dem die schlitzförmige Öffnung (34) beinhaltenden Wandbereich weg erstrecken und mit der Längsrichtung der Kanäle einen spitzen Winkel bilden.

3. Plattensäge nach Anspruch 2, dadurch gekennzeichnet, daß sich die Prallflächen (42) über mindestens die Hälfte der Höhe der Stützbalkenkanäle (16) erstrecken.

4. Plattensäge nach Anspruch 2 oder 3, dadurch gekennzeichnet, daß der Winkel, den die Prallflächen (42) mit der Längsrichtung der Kanäle (16) bilden, ca. 20° bis ca. 45° beträgt.

5. Plattensäge nach einem der Ansprüche 2 bis 4, dadurch gekennzeichnet, daß die Prallflächen (42) so angeordnet sind, daß zwei benachbarte Flächen sich in Längsrichtung überlappen.

6. Plattensäge nach einem der Ansprüche 2 bis 5, dadurch gekennzeichnet, daß die Prallfläche (42) eine teilzylindrische Fläche aufweist, deren Radius im wesentlichen dem Sägeblattradius entspricht oder größer ist.

7. Plattensäge nach Anspruch 2, dadurch gekennzeichnet, daß die Prallflächen (42) ungefähr parallel zur Tangente des Kreisumfangs des Sägeblatts an dessen Eintrittsstelle in den Kanal (16) angeordnet sind.

8. Plattensäge nach einem der Ansprüche 1 bis 7, dadurch gekennzeichnet, daß die Stützbalkenkanäle (16) an ihrem mit einem Absaugkanal (20) verbundenen Ende ein Leitelement aufweisen, welches den im Stützbalkenkanal (16) anfallenden Sägestaub mit einer vertikal nach unten gerichteten Komponente in den zugehörigen Absaugkanal (20) leitet.

## Claims

1. Vertical panel saw (10) having a horizontally and vertically displaceable saw unit (28), having a substantially vertically arranged and vertically movable support grid (14) which receives a workpiece and which comprises a multiplicity of horizontally arranged support bars (16), which are spaced from one another in parallel, and exhaust channels (20), which are arranged perpendicularly thereto and which open towards the workpiece, and having an apparatus for receiving the saw dust which is produced on the support grid side during horizontal cutting, characterised in that the support bars (16) are in the form of substantially closed channels, each having an elongate opening (34) which extends substantially over the entire length of the support bar and into which an edge of a saw blade of the saw unit (28) can enter in a substantially contact-free manner during horizontal cutting, and in that the support bar channels (16) are connected to a saw dust receiving device, the support bar channels (16) at the same time forming a portion of the apparatus for receiving the saw dust which is produced on the support grid side during horizontal cutting and, with one end, flowing into an exhaust channel (20), which also forms a portion of the saw dust receiving device, and the exhaust channels (20) having a downwardly directed guide element at the entry points of the support bar channels (16).

2. Panel saw according to claim 1, characterised in that the support bar channels contain baffle plates (42) which extend inside the channels, away from the wall region that contains the elongate opening (34), and which form an acute angle with the longitudinal direction of the channels.

3. Panel saw according to claim 2, characterised in that the baffle plates (42) extend over at least half of the height of the support bar channels (16).

4. Panel saw according to claim 2 or 3, characterised in that the angle which the baffle plates (42) form with the longitudinal direction of the channels (16) is from approximately 20° to approximately 45°.

5. Panel saw according to any one of claims 2 to 4, characterised in that the baffle plates (42) are arranged in such a manner that two adjacent plates overlap one another in the longitudinal direction.

6. Panel saw according to any one of claims 2 to 5, characterised in that the baffle plate (42) has a partially cylindrical face whose radius is substantially equivalent to or greater than the radius of the saw blade.

7. Panel saw according to claim 2, characterised in that the baffle plates (42) are arranged at the point of entry of the saw blade into the channel (16) and are approximately parallel with the tangent of the periphery of the saw blade.

8. Panel saw according to any one of claims 1 to 7, characterised in that the support bar channels (16) have, at their end connected to an exhaust channel (20), a guide element which guides the saw dust produced in the support bar channel (16) into the associated exhaust channel (20) with a component which is directed vertically downwards.

## Revendications

1. Scie verticale pour le découpage de panneaux (10), comprenant une unité de sciage (28) qui peut se déplacer horizontalement et verticalement, une grille de support (14) disposée sensiblement verticalement et mobile en translation dans la direction verticale, qui comprend une pluralité de poutres de support (16) disposées horizontalement et espacées parallèlement entre elles, ainsi que des canaux d'aspiration (20) disposés perpendiculairement à ces poutres et qui s'ouvrent vers la pièce à découper, et un dispositif destiné à collecter la sciure qui se forme sur le côté dirigé vers la grille de support lors de la coupe horizontale, caractérisée en ce que les poutres de support (16) sont constituées par des canaux sensiblement fermés présentant chacun une ouverture (34) en forme de fente qui s'étend sensiblement sur toute la longueur sur la poutre de support, et dans laquelle un bord de la lame de scie de l'unité de sciage (28) peut pénétrer sensiblement sans contact lors de la coupe horizontale, et en ce que les canaux (16) des poutres de support sont reliés à un collecteur de sciure, lesdits canaux (16) des poutres de support formant en même temps une partie du dispositif destiné à collecter la sciure qui se forme sur le côté dirigé vers la grille de support lors de la coupe horizontale, et débouchent par une extrémité dans un canal d'aspiration (20), lequel forme ici également une partie du collecteur de sciure, les canaux d'aspiration (20) présentant un élément déflecteur dirigé vers le bas au droit des zones d'entrée des canaux (16) des poutres de support.

2. Scie pour le découpage de panneaux selon la revendication 1, caractérisée en ce que les canaux des poutres de support présentent des chicanes (42) qui s'étendent à l'intérieur des canaux, dans le sens qui s'éloigne de la région de paroi qui présente l'ouverture (34) en forme de fente, et qui forment un angle aigu avec la direction longitudinale des canaux.

3. Scie pour le découpage de panneaux selon la revendication 2, caractérisée en ce que les chicanes (42) s'étendent sur au moins la moitié de la hauteur des canaux (16) des poutres de support.

4. Scie pour le découpage de panneaux selon la revendication 2 ou 3, caractérisée en ce que l'angle que les chicanes (42) forment avec la direction longitudinale des canaux (16) vaut de environ 20° à environ 45°.

5. Scie pour le découpage de panneaux selon une des revendications 2 à 4, caractérisée en ce que les chicanes (42) sont disposées de telle manière que deux chicanes adjacentes se recouvrent dans la direction longitudinale.

6. Scie pour le découpage de panneaux selon une des revendications 2 à 5, caractérisée en ce que la chicane (42) présente une surface partiellement cylindrique, dont le rayon correspond sensiblement au rayon de la lame de scie ou est plus grand que ce dernier.

7. Scie pour le découpage de panneaux selon la revendication 2, caractérisée en ce que les chicanes (42) sont disposées à peu près parallèlement à la tangente à la circonférence de la lame de scie, dans sa zone d'entrée dans le canal (16).

8. Scie pour le découpage de panneaux selon une des revendication 1 à 7, caractérisée en ce qu'à leur extrémité reliée à un canal d'aspiration (20), les canaux (16) des poutres de support présentent un élément déflecteur qui dévie la sciure présente dans le canal (16) de la poutre de support vers le canal d'aspiration (20) correspondant, avec une composante dirigée verticalement vers le bas.
